# FASCICULE DE BREVET EUROPEEN

(11) **EP 4 032 371 B1**
(45) Date de publication et mention de la délivrance du brevet: **09.07.2025**
(21) Numéro de dépôt: 20780248.9
(22) Date de dépôt: 08.09.2020
(51) Int. Cl.: H05B 3/34

(54) **STRUCTURE CHAUFFANTE POUR VEHICULE AUTOMOBILE**
HEIZSTRUKTUR FÜR EIN KRAFTFAHRZEUG
HEATING STRUCTURE FOR A MOTOR VEHICLE

(30) Priorité: 19.09.2019 FR 1910330
(43) Date de publication de la demande: 27.07.2022
(73) Titulaire: VALEO SYSTEMES THERMIQUES, 78320 Le Mesnil Saint-Denis (FR)
(72) Inventeur: DEVIENNE, Nicolas, 78320 Le Mesnil Saint-Denis (FR); AHIZI, Samuel, 78320 Le Mesnil Saint-Denis (FR); GOUTHAM, Naveen Nagendran, 78320 Le Mesnil Saint-Denis (FR)
(74) Mandataire: Valeo Systèmes Thermiques
(86) Numéro de dépôt international: PCT/FR2020/051549
(87) Numéro de publication internationale: WO 2021/053283

(56) Documents cités:
- EP-A1- 0 582 734
- DE-A1- 102012 208 534
- FR-A1- 3 064 874

## Description

La présente invention concerne une structure chauffante destinée notamment à être installé à l'intérieur d'un habitacle d'un véhicule, cette structure étant notamment un panneau radiant.

Généralement, un panneau radiant comprend une pluralité d'électrodes configurées pour délivrer de la chaleur par effet Joule en alimentant avec du courant électrique un revêtement conducteur. On pourra par exemple se reporter au document US 2016/0059669 qui décrit un tel panneau radiant.

Le document EP0582734A1 divulgue une structure selon le préambule de la revendication 1.

Un panneau radiant est un dispositif comprenant généralement un circuit électrique configuré pour délivrer de la chaleur par effet Joule en alimentant avec du courant électrique des éléments conducteurs résistifs. Il peut s'agir d'éléments filaires ou des revêtements surfaciques. D'après la littérature existante, le revêtement conducteur peut être par exemple une couche de peinture comprenant des particules de carbone et/ou des particules métalliques. Un problème soulevé aujourd'hui est la difficulté d'obtenir un chauffage homogène sur toute la surface du panneau radiant, c'est-à-dire une température de chauffage qui ne varie pas d'un point à l'autre de la surface du panneau radiant. A cet inconvénient s'ajoutent des contraintes géométriques puisque le panneau radiant est destiné à être disposé dans différentes parties de l'habitacle (pavillon, portière, pilier, boîte à gants, etc..

La présente invention a pour objet de proposer des panneaux radiants améliorés.

La présente invention concerne ainsi une structure chauffante, notamment flexible ou souple, destinée notamment à être installée à l'intérieur d'un habitacle d'un véhicule, cette structure étant notamment un panneau radiant, la structure chauffante comprenant au moins une couche résistive agencée pour produire un dégagement thermique lorsque cette couche est traversée par un courant électrique, cette structure comprenant en outre un réseau d'électrodes comportant une pluralité d'électrodes de contact agencées pour être en contact électrique avec la couche résistive pour faire parcourir du courant électrique dans cette couche résistive, deux au moins de ces électrodes de contact étant en contact avec une zone de la couche résistive, ces deux électrodes de contact étant en regard l'une de l'autre de sorte que du courant électrique puisse circuler de l'une de ces électrodes vers l'autre des électrodes de contact en passant par cette zone de la couche résistive, notamment sans passer par une autre électrode de contact, ces deux électrodes de contact bordant ladite zone présentant une forme choisie de sorte que les deux électrodes se rapprochent mutuellement sur une portion des électrodes et restent plus éloignées aux extrémités de ces électrodes, la structure chauffante comportant des électrodes avec deux bords adjacents à une zone de couche résistive et ces deux bords de l'électrode présentant une symétrie axiale, et ces bords présentant chacun une concavité dirigée respectivement vers l'autre bord.

Dans un exemple de l'invention, ces deux électrodes comportent chacune une branche unique, sans ramification.

Selon l'invention, l'inter-distance entre les deux électrodes de contact est plus faible sur une portion de ces électrodes et plus grande sur une autre portion des électrodes. La portion en regard de la plus faible inter-distance est notamment sensiblement au milieu de la longueur des électrodes de contact.

Les électrodes de contact avec les inter-distances variables sont reliées à des électrodes de distribution, notamment parallèles, agencées de sorte que le sens du courant qui y circulent sont opposés. On peut dire que dans les électrodes de distribution, on a des flux de courant croisés.

Ainsi la résistance électrique rencontrée par les lignes de courant entre ces deux électrodes, et passant dans la zone de la couche résistive, peut être sensiblement uniforme.

L'invention permet notamment de surmonter le problème d"inhomogénéité du chauffage dans une structure chauffante, notamment un panneau radiant, sous connexion à flux de courant croisés. En effet, lors de l'utilisation d'une approche à flux croisés, une chute de tension est observée sur la longueur de chaque électrode. Ce phénomène conduit à un courant plus faible traversant le centre du panneau radiant.

La puissance délivrée par la structure chauffante étant directement proportionnelle au courant traversant la structure, cet effet indésirable entraîne un chauffage non homogène le long de la couche résistive. Dans certains cas, cela peut entraîner une gêne thermique ou une inefficacité thermique. L'invention permet d'avoir une homogénéité plus grande de chauffage notamment en adaptant la distance entre les électrodes en fonction de la valeur de la perte de tension différentielle.

Notamment l'invention, grâce à la réduction de l'inter-distance adéquate, permet de rendre sensiblement uniforme la puissance de chauffage dégagée par la zone de la couche résistive.

Selon l'un des aspects de l'invention, le courant électrique circule dans des sens opposés dans les deux électrodes de distribution.

Selon l'un des aspects de l'invention, la distance entre les deux électrodes est minimale dans des portions centrales respectives des deux électrodes, notamment sensiblement au milieu de ces électrodes.

Selon l'un des aspects de l'invention, les bords de l'une au moins des électrodes comportent une concavité dirigée à l'opposé de l'autre électrode en regard.

Selon l'un des aspects de l'invention, l'un au moins de bords est arrondi.

Selon l'un des aspects de l'invention, l'un au moins des bords présente des portions en segment de droite.

Selon l'un des aspects de l'invention, l'un des bords de l'électrode est droit et l'autre bord présente une forme non droite, notamment arrondie ou en segments de droite, notamment en pointe de triangle

Selon l'un des aspects de l'invention, les deux électrodes présentent une symétrie par rapport à un axe de symétrie sur la majeure partie de leur longueur.

Selon l'un des aspects de l'invention, ces bords symétriques comportent par exemple chacun une forme en coin ou une forme arrondie, notamment avec le sommet du coin ou le sommet de l'arrondi sensiblement au milieu de l'électrode.

Selon l'un des aspects de l'invention, les électrodes séparées sont de formes différentes.

Selon l'un des aspects de l'invention, les électrodes de contact situées aux extrémités sont de formes différentes par rapport aux électrodes intermédiaires entre ces électrodes de contact, notamment un bord est droit et l'autre bord est bombé en direction de l'autre électrode de l'autre côté de la zone de la couche résistive.

Selon l'un des aspects de l'invention, le réseau d'électrodes comprend des électrodes de distribution agencées pour conduire du courant électrique d'une source électrique vers les électrodes de contact, plusieurs électrodes de contact se raccordant à une même électrode de distribution.

Selon l'un des aspects de l'invention, l'une au moins des électrodes de distribution est rectiligne sur une partie au moins de sa longueur, et les électrodes de contact qui sont associées à cette électrode de distribution se raccordant, par exemple perpendiculairement, à cette électrode de distribution.

Bien entendu, les électrodes de distribution peuvent présenter des formes différentes, notamment courbes avec des arrondis. Les électrodes de distribution peuvent parallèles entre elles ou non.

Selon l'un des aspects de l'invention, le réseau d'électrodes comporte au moins deux électrodes de distribution qui sont parallèles entre elles sur au moins une partie de leur longueur, et leurs électrodes de contact associées sont disposées entre ces deux électrodes de distribution et sont alternées avec une inter-distance qui décroit en lien avec la décroissance de la tension présente entre les paires d'électrodes de manière à maintenir sensiblement uniforme la puissance électrique entre les paires d'électrodes de contact.

Selon l'un des aspects de l'invention, les électrodes de contact disposées entre deux électrodes de distribution, ces électrodes de contact faisant partie d'un même groupe d'électrodes de contact, présente seulement deux valeurs d'inter-distance, ou au moins trois valeurs ou plus valeurs d'inter-distance.

Selon l'un des aspects de l'invention, la couche résistive est une couche déposée sur un substrat, notamment par sérigraphie, cette couche résistive s'étendant notamment entre les deux électrodes de distribution associées au groupe d'électrodes de contact.

Selon l'un des aspects de l'invention, la couche résistive comporte notamment du carbone.

Selon l'un des aspects de l'invention, les électrodes sont réalisées en matériau conducteur, notamment métallique tel que de l'encre chargée de particules conductrices, notamment de particules d'argent ou de cuivre. Si on le souhaite, les électrodes sont des rubans adhésifs métalliques, par exemple en cuivre. Le cas échéant, ces électrodes pourront éventuellement être réalisées par dépôt d'un matériau sur le substrat

Selon l'un des aspects de l'invention, la couche résistive associée au groupe d'électrodes de contact est une couche continue, ou en variante comporte une pluralité d'éléments résistifs discrets formant cette couche.

Selon l'un des aspects de l'invention, les électrodes de contact d'un même groupe présentent la même longueur.

Selon l'un des aspects de l'invention, la structure chauffante comporte un substrat qui porte la couche résistive et les électrodes. Le substrat est de préférence d'épaisseur inférieure à 1 cm, pour une superficie de plusieurs cm2 au moins.

La structure chauffante est notamment de forme en couche(s).

L'invention a encore pour objet un composant d'habitable de véhicule automobile, notamment un composant pour être intégré à une portière du véhicule, ou notamment des parties de planche de bord, d'habillage de cave à pied, de pavillon, d'accoudoir, comportant une structure chauffante, notamment un panneau radiant, telle que précitée.

Selon l'un des aspects de l'invention, le composant d'habitacle qui comprend la structure chauffante, par exemple le panneau radiant, est agencé pour chauffer par radiation thermique (panneau radiant) ou par conduction thermique ou contact thermique (structure chauffante par contact), et non par chauffage par convection, par exemple par de la chaleur transportée par de l'air en mouvement. Notamment la structure chauffante n'est traversée par aucun flux d'air destiné à refroidir ou chauffer l'habitacle. De préférence, le panneau est déconnecté de système de mise en mouvement d'air.

La structure chauffante et l'HVAC ( en anglais « Heating, Ventilation and Air-Conditioning », ou en français « Chauffage, ventilation et climatisation ») du véhicule peuvent, si on le souhaite, être contrôlés de manière coordonnée.

Le composant forme par exemple un élément d'une boite à gant ou un panneau de portière de véhicule, ou de toit d'habitacle.

L'invention a encore pour objet une structure chauffante ayant une couche résistive et des électrodes pour chauffer cette couche, cette structure étant configurée pour être intégrée dans un composant d'habitacle qui comporte un décor visible depuis l'intérieur de l'habitacle, ce décor étant par exemple un habillage de l'habitable, tel que par exemple un tissu, un cuir ou un revêtement esthétique.

Il est entendu que l'ensemble des caractéristiques et configurations précédemment ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :

La figure 1 [Fig. 1] est une représentation schématique d'un exemple de réalisation d'un panneau radiant selon un exemple de réalisation de l'invention;

La figure 2 [Fig. 2] est une représentation schématique de composants incluant le panneau radiant de l'invention,

La figure 3 [Fig. 3] est une représentation schématique d'un autre exemple de de l'invention,

La figure 4 [Fig. 4] est une représentation schématique d'un autre exemple de de l'invention.

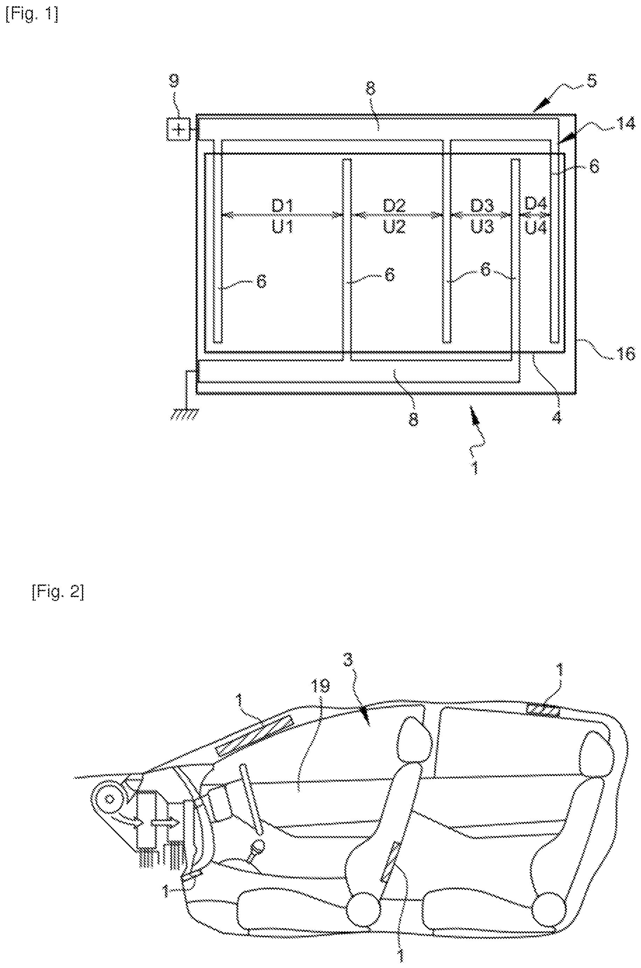

La figure 1 représente panneau radiant 1, formant une structure chauffante au sens de l'invention, agencé pour être installé à l'intérieur d'un habitacle 3 d'un véhicule.

Le panneau radiant 1 comprend une couche résistive 4 agencée pour produire un dégagement thermique lorsque cette couche 4 est traversée par un courant électrique.

La couche résistive 4 est par exemple une peinture acrylique chargée de particules conductrices ou semi conductrices. La charge conductrice est par exemple sous la forme de paillettes de carbone et de graphite.

Ce panneau 1 comprend en outre un réseau d'électrodes 5 comportant une pluralité d'électrodes de contact 6 agencées pour être en contact électrique avec la couche résistive 4 pour faire parcourir du courant électrique dans cette couche résistive 4.

Ces électrodes de contact 6 sont agencées avec une inter-distance D1, D2 ... Di entre électrodes successives, inter-distance qui est variable.

Ces électrodes de contact 6 sont rectilignes et parallèles entre elles dans l'exemple décrit.

Le réseau d'électrodes 5 comprend des électrodes de distribution 8 agencées pour conduire du courant électrique, l'une de ces électrodes 8 étant reliée d'une source électrique 9 par exemple de polarité électrique positive, vers les électrodes de contact 6. L'autre électrode de distribution 8 est reliée à l'autre polarité, étant par exemple reliée à une masse.

Le courant électrique passe ainsi dans une électrode de distribution 8, qui le distribue dans les électrodes de contact 6. Le courant circule ensuite dans la couche résistive 4 avant d'être collecté par les électrodes de contact 6 reliées à l'autre électrode de distribution 8.

Plusieurs électrodes de contact 6 se raccorde à une même électrode de distribution 8.

Les électrodes de distribution 8 sont rectilignes sur une partie de sa longueur, voire toute leur longueur, et les électrodes de contact 6 qui sont associées à ces électrodes de distribution 8 se raccordant perpendiculairement à cette électrode de distribution 8 associée.

Ici le réseau d'électrodes 5 comporte deux électrodes de distribution 8 qui sont parallèles entre elles, et leurs électrodes de contact 6 associées sont disposées entre ces deux électrodes de distribution 8 et sont alternées avec une inter-distance D1, D2.. Di qui décroit en lien avec la décroissance de la tension U1, U2... Ui présente entre les paires d'électrodes 6 de manière à maintenir sensiblement uniforme la puissance électrique entre les paires d'électrodes de contact.

Les électrodes de contact 6 disposées entre les deux électrodes de distribution 8, ces électrodes de contact faisant partie d'un même groupe 14 d'électrodes de contact, présente une pluralité de valeurs d'inter-distance D1, D2 ... Di. Dans l'exemple décrit, nous avons D1>D2>D3> D4, et U1>U2>U3> U4 pour les tensions entre les électrodes 6.

La couche résistive 4 est une couche déposée sur un substrat 16, notamment par sérigraphie, cette couche résistive 4 s'étendant notamment entre les deux électrodes de distribution 8 associées au groupe d'électrodes de contact. Le substrat 16 est par exemple réalisé en non-tissé, et est souple et flexible.

Les électrodes 6 et 8 sont réalisées en matériau conducteur, notamment métallique tel que de l'encre chargée de particules conductrices, notamment de particules d'argent ou de cuivre.

Dans l'exemple décrit, la couche résistive 4 associée au groupe d'électrodes de contact est une couche continue sensiblement rectangulaire. D'autres formes sont bien entendu envisageables.

Les électrodes de contact 6 d'un même groupe 14 présentent la même longueur. En variante, les électrodes 6 peuvent être de longueur différentes.

Dans un exemple non illustré, plusieurs paires d'électrodes de distribution 8 peuvent être prévues, et il y a alors plusieurs groupe 14 d'électrodes de contact 6.

Un composant d'habitable 19 de véhicule automobile, notamment un composant pour être intégré à une portière du véhicule, est prévu avec un panneau radiant 1. Plusieurs composants peuvent être revus dans l'habitacle.

Le composant 19 peut comportant une couche de décoration appliquée sur le panneau radiant. La couche de décoration peut par exemple être imperméable à de l'air, étant par exemple du cuir.

Les électrodes de distribution 8 peuvent, si on le souhaite, avoir des formes plus complexes, avec par exemple un ou plusieurs coudes arrondis reliant des portions rectilignes.

Dans l'exemple décrit, toutes les valeurs Ui d'inter-distance d'un groupe 15 sont différentes. En variante, il est possible que certaines valeurs inter-distance d'un même groupe sont identiques, et non toutes différentes.

Le substrat peut être une feuille ou une toile par exemple.

Les électrodes de contact 6 et leurs électrodes de distribution 8 associées sont agencées à la manière de peignes imbriqués.

Dans une variante, la structure chauffante est utilisée dans un composant d'habitacle, étant un accoudoir pour passager, cette structure pouvant réchauffer le bras d'un passager par contact thermique.

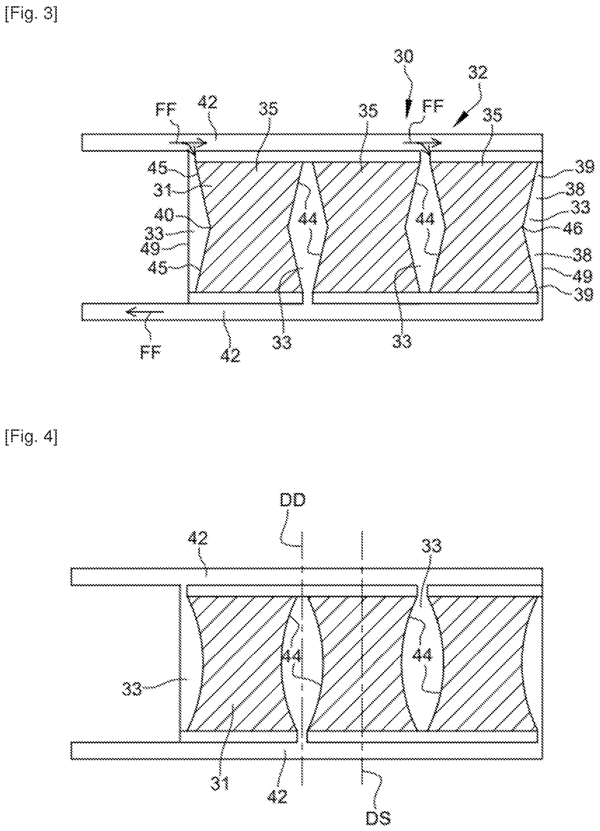

On a représenté sur la figure 3 une structure chauffante 30 selon un autre exemple de mise en œuvre de l'invention, comprenant une couche résistive 31 agencée pour produire un dégagement thermique lorsque cette couche 31 est traversée par un courant électrique, cette structure 30 comprenant en outre un réseau d'électrodes 32 comportant une pluralité d'électrodes de contact 33 agencées pour être en contact électrique avec la couche résistive31 pour faire parcourir du courant électrique dans cette couche résistive 31, ces électrodes de contact 33 étant en contact avec une zone 35 de la couche résistive 31, ces électrodes de contact 33 étant en regard l'une de l'autre de sorte que du courant électrique puisse circuler de l'une de ces électrodes 33 vers l'autre des électrodes de contact 33 en passant par cette zone 35 de la couche résistive, notamment sans passer par une autre électrode de contact, ces électrodes de contact 33 bordant chaque zone 35 présentant une forme choisie de sorte que les deux électrodes 33 voisines se rapprochent mutuellement sur une portion 38 des électrodes et restent plus éloignées aux extrémités 39 de ces électrodes.

Ces électrodes de contact 33 comportent chacune une branche unique, sans ramification.

L'inter-distance entre deux électrodes de contact 33 voisines est plus faible sur une portion de ces électrodes et plus grande sur une autre portion des électrodes. La portion en regard de la plus faible inter-distance est notamment sensiblement au milieu 40 de la longueur des électrodes de contact 33.

Les électrodes de contact 33 avec les inter-distances variables sont reliées à des électrodes de distribution 42, notamment parallèles, agencées de sorte que le sens du courant, représenté par des flèches FF, qui y circulent sont opposés. On peut dire que dans les électrodes de distribution, on a des flux de courant croisés.

Dans les électrodes de contact, les flux de courant sont aussi croisés alternativement, à savoir les sens de courant s'alternent d'une électrode de contact à l'autre.

Le courant électrique circule dans des sens opposés dans les deux électrodes de distribution 42.

La distance entre deux électrodes de contact 33 est minimale dans le milieu 40 respectif des deux électrodes.

Dans l'exemple de la figure 3, les bords 44 des électrodes de contact intermédiaires 33 présentent des portions en segment de droite 45 formant respectivement des coins 46.

En variante, comme illustré sur la figure 4, les bords 44 sont arrondis.

Dans les figures 3 et 4, les électrodes d'extrémité 33 présentent chacun un bord droit 49 est droit et l'autre bord 44 présente une forme non droite, notamment arrondie ou en segments de droite, notamment en pointe de triangle.

Les deux électrodes présentent une symétrie par rapport à un axe de symétrie DS sur la majeure partie de leur longueur. Les électrodes 33 successives se raccordent alternativement à l'électrode de distribution 42 d'un côté et à l'autre électrode de distribution de l'autre côté. Ces électrodes 33 ne sont ainsi pas raccordées en même temps aux deux électrodes de distribution 42.

La structure chauffante comporte des électrodes de contact 33 intermédiaires avec deux bords adjacents à une zone 35 de couche résistive et ces deux bords 44 de l'électrode présentent une symétrie axiale selon l'axe DD, et ces bords 44 présentent chacune une concavité dirigée respectivement vers l'autre bord 44 de cette même électrode.

## Revendications

1. Structure chauffante (30), notamment flexible ou souple, destinée notamment à être installée à l'intérieur d'un habitacle d'un véhicule, cette structure étant notamment un panneau radiant, la structure chauffante (30) comprenant au moins une couche résistive agencée pour produire un dégagement thermique lorsque cette couche (31) est traversée par un courant électrique, cette structure comprenant en outre un réseau d'électrodes (32) comportant une pluralité d'électrodes de contact (33) agencées pour être en contact électrique avec la couche résistive pour faire parcourir du courant électrique dans cette couche résistive, deux au moins de ces électrodes de contact étant en contact avec une zone de la couche résistive (31), ces deux électrodes de contact étant en regard l'une de l'autre de sorte que du courant électrique puisse circuler de l'une de ces électrodes vers l'autre des électrodes de contact en passant par cette zone de la couche résistive, la structure chauffante comportant des électrodes avec deux bords adjacents à une zone de couche résistive et ces deux bords de l'électrode présentant une symétrie axiale (DD),
**caractérisée en ce que** ces deux électrodes de contact (33) bordant ladite zone présentent une forme choisie de sorte que les deux électrodes se rapprochent mutuellement sur une portion des électrodes et restent plus éloignées aux extrémités de ces électrodes, et ces bords présentent chacun une concavité dirigée respectivement vers l'autre bord.

2. Structure chauffante selon la revendication précédente, dans laquelle le courant électrique circule dans des sens opposés dans de deux électrodes de distribution (42).

3. Structure chauffante selon l'une des revendications précédentes, dans laquelle la distance entre les deux électrodes de contact (33) est minimale dans des portions centrales respectives des deux électrodes, notamment sensiblement au milieu de ces électrodes.

4. Structure chauffante selon l'une des revendications précédentes, dans laquelle les bords (44) de l'une au moins des électrodes comportent une concavité dirigée à l'opposé de l'autre électrode en regard.

5. Structure chauffante selon l'une des revendications précédentes, dans laquelle l'un au moins de bords (44) est arrondi.

6. Structure chauffante selon l'une des revendications précédentes, dans laquelle l'un au moins des bords (44) présente des portions en segment de droite.

7. Structure chauffante selon l'une des revendications précédentes, dans laquelle l'un des bords de l'électrode est droit (49) et l'autre bord présente une forme non droite, notamment arrondie ou en segments de droite, notamment en pointe de triangle

8. Structure chauffante selon l'une des revendications précédentes, dans laquelle les deux électrodes présentent une symétrie par rapport à un axe de symétrie (DS) sur la majeure partie de leur longueur.

9. Structure chauffante selon l'une des revendications précédentes, dans laquelle les électrodes de contact avec les inter-distances variables sont reliées à des électrodes de distribution (42) , notamment parallèles, agencées de sorte que le sens du courant qui y circulent sont opposés.

## Patentansprüche

1. Heizstruktur (30), insbesondere flexibel oder biegsam, die insbesondere dazu bestimmt ist, innerhalb eines Innenraums eines Fahrzeugs eingebaut zu werden, wobei diese Struktur insbesondere eine Strahlungsplatte ist, wobei die Heizstruktur (30) mindestens eine resistive Schicht umfasst, die dazu ausgebildet ist, eine Wärmeabgabe zu erzeugen, wenn diese Schicht (31) von einem elektrischen Strom durchflossen wird, wobei diese Struktur ferner ein Elektrodenarray (32) umfasst, das eine Mehrzahl von Kontaktelektroden (33) beinhaltet, die dazu ausgebildet sind, mit der resistiven Schicht in elektrischem Kontakt zu sein, um elektrischen Strom in dieser resistiven Schicht fließen zu lassen, wobei mindestens zwei dieser Kontaktelektroden in Kontakt mit einem Bereich der resistiven Schicht (31) sind, wobei diese beiden Kontaktelektroden einander gegenüber liegen, so dass elektrischer Strom von einer dieser Elektroden über diesen Bereich der resistiven Schicht zu der anderen der Kontaktelektroden fließen kann, wobei die Heizstruktur Elektroden mit zwei an einen Bereich der resistiven Schicht angrenzenden Rändern beinhaltet und wobei diese beiden Ränder der Elektrode eine axiale Symmetrie (DD) aufweisen, **dadurch gekennzeichnet, dass** diese beiden den Bereich säumenden Kontaktelektroden (33) eine Form aufweisen, die so gewählt ist, dass sich die beiden Elektroden wechselseitig über einen Abschnitt der Elektroden nähern und an den Enden dieser Elektroden weiter entfernt bleiben, und jeder dieser Ränder eine Konkavität aufweist, die jeweils zu dem anderen Rand hin gerichtet ist.

2. Heizstruktur nach dem vorhergehenden Anspruch, wobei der elektrische Strom in zwei Abgabeelektroden (42) in entgegengesetzte Richtung fließt.

3. Heizstruktur nach einem der vorhergehenden Ansprüche, wobei der Abstand zwischen den beiden Kontaktelektroden (33) in jeweiligen zentralen Abschnitten der beiden Elektroden, insbesondere im Wesentlichen in der Mitte dieser Elektroden, am kleinsten ist.

4. Heizstruktur nach einem der vorhergehenden Ansprüche, wobei die Ränder (44) mindestens einer der Elektroden eine Konkavität beinhalten, die entgegengesetzt zu der gegenüber liegenden anderen Elektrode ausgerichtet ist.

5. Heizstruktur nach einem der vorhergehenden Ansprüche, wobei mindestens einer der Ränder (44) gerundet ist.

6. Heizstruktur nach einem der vorhergehenden Ansprüche, wobei mindestens einer der Ränder (44) Abschnitte aus Geradensegmenten aufweist.

7. Heizstruktur nach einem der vorhergehenden Ansprüche, wobei einer der Ränder der Elektrode gerade (49) ist und der andere Rand eine nicht gerade Form, insbesondere gerundet oder aus Geradensegmenten, insbesondere aus einer Dreieckspitze, aufweist.

8. Heizstruktur nach einem der vorhergehenden Ansprüche, wobei die beiden Elektroden eine Symmetrie in Bezug auf eine Symmetrieachse (DS) über den überwiegenden Teil ihrer Länge aufweisen.

9. Heizstruktur nach einem der vorhergehenden Ansprüche, wobei die Kontaktelektroden mit den variablen Abständen mit Abgabeelektroden (42), insbesondere parallelen, verbunden sind, die so ausgebildet sind, dass die Richtung des Stroms, die darin fließen, entgegengesetzt sind.

## Claims

1. Heating structure (30), in particular a flexible or soft heating structure, intended in particular to be installed inside a passenger compartment of a vehicle, this structure being in particular a radiant panel, the heating structure (30) comprising at least one resistive layer designed to produce a thermal output when this layer (31) is flowed through by an electric current, this structure furthermore comprising an electrode array (32) comprising a plurality of contact electrodes (33) arranged so as to be in electrical contact with the resistive layer in order to channel electric current through this resistive layer, at least two of these contact electrodes being in contact with an area of the resistive layer (31), these two contact electrodes facing one another such that electric current is able to flow from one of these electrodes to the other of the contact electrodes by flowing through this area of the resistive layer, the heating structure comprising electrodes with two edges adjacent to a resistive layer area and these two edges of the electrode exhibiting axial symmetry (DD), **characterized in that** these two contact electrodes (33) bordering said area have a shape chosen such that the two electrodes come closer to one another over a portion of the electrodes and remain further apart at the ends of these electrodes, and these edges each have a concavity directed respectively towards the other edge.

2. Heating structure according to the preceding claim, wherein the electric current flows in opposing directions in two distribution electrodes (42).

3. Heating structure according to either of the preceding claims, wherein the distance between the two contact electrodes (33) is minimal in respective central portions of the two electrodes, in particular substantially in the middle of these electrodes.

4. Heating structure according to one of the preceding claims, wherein the edges (44) of at least one of the electrodes have a concavity directed away from the other, facing electrode.

5. Heating structure according to one of the preceding claims, wherein at least one of the edges (44) is rounded.

6. Heating structure according to one of the preceding claims, wherein at least one of the edges (44) has portions in the form of a straight segment.

7. Heating structure according to one of the preceding claims, wherein one of the edges of the electrode is straight (49) and the other edge has a non-straight shape, in particular rounded or in the form of straight segments, in particular in the form of a vertex of a triangle.

8. Heating structure according to one of the preceding claims, wherein the two electrodes exhibit symmetry about an axis of symmetry (DS) over the majority of their length.

9. Heating structure according to one of the preceding claims, wherein the contact electrodes with the variable mutual distances are connected to distribution electrodes (42), in particular parallel ones, arranged such that the directions of the current flowing therein oppose one another.
